Europäisches Patentamt

European Patent Office

Office européen des brevets

(11) Veröffentlichungsnummer: **0 340 601**
**A2**

## (12) EUROPÄISCHE PATENTANMELDUNG

(21) Anmeldenummer: 89107419.7

(22) Anmeldetag: 25.04.89

(51) Int. Cl.⁴: **B29C 45/26**

(30) Priorität: 04.05.88 DE 8805897 U

(43) Veröffentlichungstag der Anmeldung:
08.11.89 Patentblatt 89/45

(84) Benannte Vertragsstaaten:
AT BE CH DE ES FR GB GR IT LI LU NL SE

(71) Anmelder: Strack-Norma GmbH
Friedrich-Ebert-Strasse 109-111
D-5600 Wuppertal 1(DE)

(72) Erfinder: Clemens, Rüth
Kruppstrasse 264
D-5600 Wuppertal 1(DE)

(74) Vertreter: Sturies, Herbert et al
Patentanwälte Dr. Ing. Dipl. Phys. Herbert
Sturies Dipl. Ing. Peter Eichler
Brahmsstrasse 29, Postfach 20 12 42
D-5600 Wuppertal 2(DE)

(54) **Spritzgiessform.**

(57) Spritzgießform, insbesondere für Spritzgießmaschinen zur Verarbeitung thermoplastischer Kunststoffe, die mehrere aneinanderliegende Formplatten
(10) aufweist, welche von in fluchtende Bohrungen
(11) eingesetzten Zentrierhülsen (12) zentriert sind,
wobei eine Zentrierhülse (12) einen Außendurchmesseränderungen gestattenden Längsschlitz hat.

Um eine Spritzgießform der eingangs genannten
Art so zu verbessern, daß ihre Zentrierhülsen (12)
einfacher ausbaubar sind, insbesondere ohne daß
dabei der Vorteil einer Außendurchmesseränderung
durch den Längsschlitz aufgegeben werden muß, ist
sie so ausgebildet, daß das in Einsetzrichtung (18)
hintere Hülsenende (19) eine darin axial fest angeordnete separate Scheibe (20) aufweist.

FIG. 1

## Spritzgießform

Die Erfindung bezieht sich auf eine Spritzgießform, insbesondere für Spritzgießmaschinen zur Verarbeitung thermoplastischer Kunststoffe, die mehrere aneinanderliegende Formplatten aufweist, welche von in fluchtende Bohrungen eingesetzten Zentrierhülsen zentriert sind, wobei eine Zentrierhülse einen Außendurchmesseränderungen gestattenden Längsschlitz hat.

Derartige Spritzgießformen finden im allgemeinen für die Verarbeitung von Kunststoffen Anwendung, jedoch auch bei der Herstellung von Metallguß. Jede Spritzgießform besteht aus mehreren einander parallelen Platten, die jeweils unterschiedliche Aufgaben übernehmen. Beispielsweise sind zwei Formhalteplatten vorhanden, die jeweils einen Formeinsatz aufnehmen, zwischen denen das Spritzgießteil hergestellt wird. Die beiden Formhalteplatten müssen beim Gießen aneinander liegen und zum Entnehmen des Werkstücks auseinanderbewegt werden. Dazu müssen sie selbst gehalten werden, wozu sie mit einer Aufspannplatte verbunden werden, gegebenenfalls unter Zwischenschaltung von Zwischenplatten. Jede Spritzgießform besteht infolgedessen aus Plattenhälften, die ihrerseits jeweils aus mehreren Platten zusammengesetzt sind. Die Platten einer Formhälfte müssen miteinander verbunden werden, damit sie eine Baueinheit bilden, welche mit ihrer Formhalteplatte an der Formhalteplatte der anderen eine Baueinheit bildenden Formhälfte anliegt, wenn das Werkstück hergestellt wird, und die entfernt wird, wenn das Werkstück entnommen werden soll. Es muß infolgedessen dafür gesorgt werden, daß die beiden Formhälften zur Herstellung des Werkstücks genau in der dafür vorgesehenen Lage aneinander liegen, und es muß dafür gesorgt werden, daß die Platten einer Formhälfte untereinander die gewünschte genaue Lage zueinander haben. Damit die Formhälften zum Herstellen des Werkzeugs die vorgesehene Relativlage einnehmen, werden Gleitführungsbolzen und Gleitführungsbuchsen verwendet, die jeweils in den Formhälften angebracht werden und beim Aneinanderlegen der Formhalteplatten aufgrund ihrer maßgenauen Herstellung die gewünschte Relativlage der Formhälften bzw. der Formhalteplatten gewährleisten. Die gewünschte Relativlage mehrerer Formplatten einer Formhälfte untereinander wird durch Zentrierhülsen gewährleistet, die in fluchtende Bohrungen der Formplatten eingesetzt werden und letztere zueinander ausrichten.

Zentrierhülsen der eingangs genannten Art sind allgemein bekannt. Ihr Längsschlitz gestattet Außendurchmesseränderungen, so daß geringfügige Toleranzen der fluchtenden Bohrungen der Formplatten ausgeglichen werden können, indem die Zentrierhülse etwas zusammengedrückt wird, oder indem sich die Zentrierhülse aufgrund ihrer Spannkraft im Durchmesser etwas vergrößert. Aufgrund ihrer Fähigkeit, sich aufzuweiten, sitzen die Zentrierhülsen gewöhnlich in den Bohrungen der Formplatten fest und sind nicht ohne weiteres herauszunehmen. Ein solches Herausnehmen der Zentrierhülsen muß erfolgen, wenn die Formplatten auseinandergebaut werden müssen, z.B. um eine der Platten auszuwechseln. Es ist dann häufig schwierig, die festsitzende und vergleichsweise glatte Hülse auszubauen, ohne die Form zu beschädigen.

Der Erfindung liegt daher die Aufgabe zugrunde, eine Spritzgießform der eingangs genannten Art so zu verbessern, daß ihre Zentrierhülsen einfacher ausbaubar sind, insbesondere ohne daß dabei der Vorteil einer Außendurchmesseränderung durch den Längsschlitz aufgegeben werden muß.

Diese Aufgabe wird dadurch gelöst, daß das in Einsetzrichtung hintere Hülsenende eine darin axial fest angeordnete separate Scheibe aufweist.

Für die Erfindung ist von Bedeutung, daß die Zentrierhülse mehrteilig ausgebildet wird. Mit dem Hülsenkörper wird eine separate Scheibe axial fest verbunden, so daß mit Hilfe dieser axial festen Scheibe eine Axialbewegung der Zentrierhülse auch dann erreicht wird, wenn letztere in den Bohrungen der Formplatten klemmt. Dabei versteht sich, daß die Klemmung der Zentrierhülse überwindbar sein muß. Das ist jedoch durch entsprechende Toleranzgebung der Bohrungen der Formplatten und der Zentrierhülsen sowie deren Spannkraft erreichbar. Die Zweiteiligkeit der Zentrierhülse und der Scheibe ist auch insofern von Bedeutung, als bereits im Betrieb befindliche Zentrierhülsen nachgerüstet werden können. Die Zweiteiligkeit hat auch den Vorteil, daß die jeweiligen Bestandteile massenfertigungsgerecht, also in einfacher Weise hergestellt werden können, wobei es auch möglich ist, die Einzelteile bzw. die Zentrierhülse unabhängig voneinander einzusetzen, sofern dies vorteilhaft erscheint.

Damit die Zentrierhülse bei ihrem Ausbau aus den Formplatten auf dem kürzesten Weg entfernt werden kann, also durch Herausziehen entgegen der Einsetzrichtung bzw. durch Herausziehen von und zu derjenigen Formhältenseite, die der Scheibe am nächsten ist, ist die Scheibe mit einer Hülsenausziehausnehmung versehen. Durch die Hülsenausziehausnehmung kann die Scheibe mit einem Werkzeug hintergriffen werden, um die Zentrierhülse herauszuziehen.

Vorteilhafterweise ist die Hülsenauszieh-

mung eine Gewindebohrung, in die ein mit einem entsprechenden Gewinde versehenes Ausziehwerkzeug eingeschraubt wird, so daß sich zum Herausziehen eine vorbestimmte Eingriffslänge ergibt, die die Übertragung der erforderlichen Kräfte gewährleistet.

Die Anordnung der separaten Scheibe in das in Einsetzrichtung hintere Hülsenende gewährleistet, daß der Einbau und der Ausbau der Zentrierhülse vergleichsweise einfach ist, insbesondere durch geringen Abstand der Scheibe von demjenigen Ende der Bohrung der Formplatten, aus dem die Zentrierhülse herausgezogen werden soll.

Vorteilhafterweise ist die separate Scheibe mit der Zentrierhülse axial formschlüssig zusammengebaut. Die Formschlüssigkeit kann so gestaltet werden, daß die axial zu übertragenden Kräfte beim Hülsenausbau, aber auch beim Hülseneinbau problemlos übertragen werden können.

Wenn die separate Scheibe mit der Zentrierhülse radial begrenzt beweglich zusammengebaut ist, kann die Zentrierhülse zusammengedrückt werden, ohne auf der Scheibe aufzusitzen. Die Zentrierhülse kann dann leicht eingebaut werden, indem sie ohne Aufsitzen auf der Scheibe etwas zusammengedrückt wird. Außerdem kann die Zentrierhülse ihre Aufgabe des Toleranzenausgleichs innerhalb der Bohrungen der Formplatten ohne jede Beeinflussung durch die Scheibe wahrnehmen.

Eine baulich einfache Ausführungsform des formschlüssigen Zusammenbaus liegt vor, wenn die Zentrierhülse eine Ringnut hat, in die ein Ringvorsprung der Scheibe eingreift.

In Ausgestaltung der Erfindung weist die Scheibe einen Außendurchmesser auf, durch den das betreffende Ende der Zentrierhülse etwas aufgeweitet ist. Die Aufweitung des Zentrierhülsenendes sorgt für einen festeren Sitz der Zentrierhülse in der Bohrung der betreffenden Formplatte. Dadurch wird einem etwaigen Herausfallen der Zentrierhülse aus der Bohrung entgegengewirkt. Diese Gefahr des Herausfallens ergibt sich insbesondere nach längerem Einbau oder bei häufigerer Verwendung der Zentrierhülse infolge Materialermüdung. Bezüglich der Spreizwirkung der Scheibe ist es nicht erforderlich, daß diese mit der Zentrierhülse formschlüssig zusammengebaut ist. Vielmehr genügt ein kraftschlüssiger Einbau. Zum Ausbauen der Zentrierhülse genügt es, den Kraftschluß der Scheibe in der Zentrierhülse zu überwinden, also die Scheibe auszutreiben bzw. herauszuziehen, woraufhin sich der Außendurchmesser der Zentrierhülse so verringert, daß diese problemlos herausgezogen werden kann bzw. bei Schräglage der Bohrung herausfällt. Ein derartiges Zusammenwirken der Scheibe und der Zentrierhülse ist insbesondere für bereits längere Zeit im Einsatz befindliche Zentrierhülsen interessant, deren Spreizkraft aufgrund ihres langen Einsatzes verlorengegangen ist.

Die Erfindung wird anhand eines in der Zeichnung dargestellten Ausführungsbeispiels erläutert. Es zeigt:

Fig. 1 einen senkrechten Schnitt durch den oberen Bereich zweier Formhälften einer Spritzgießform,

Fig. 2 eine vergrößerte Darstellung einer Formhälfte ähnlich Fig. 1, und

Fig. 3 eine Darstellung des Details D der Fig. 2.

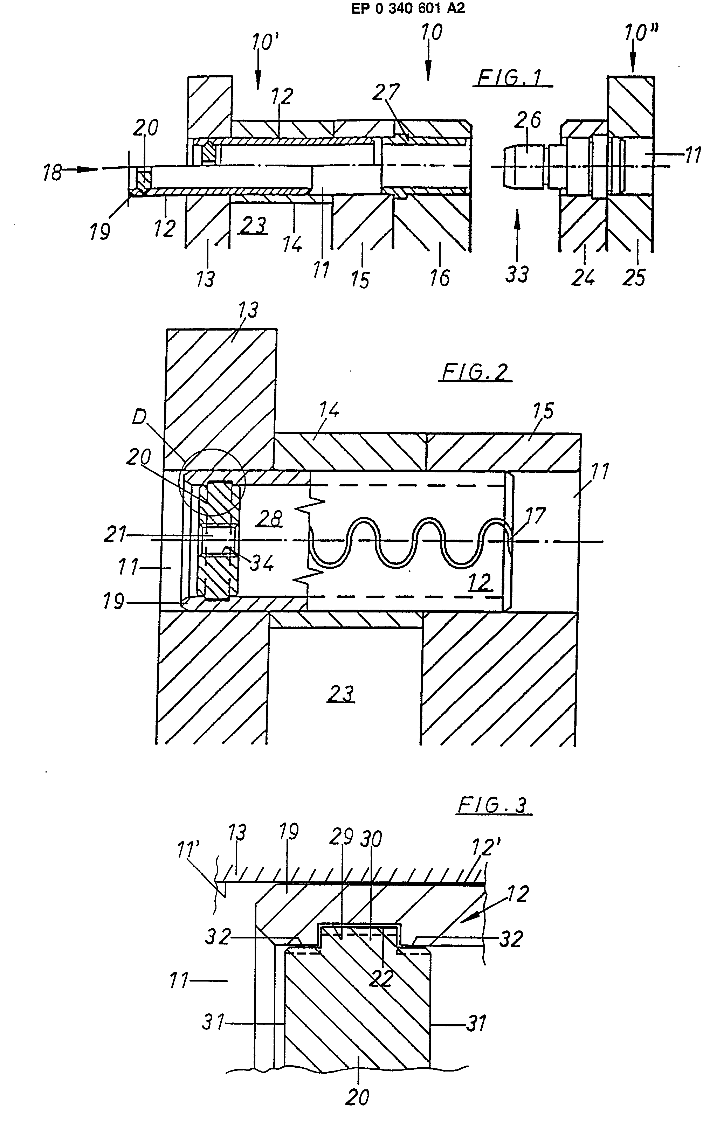

Die in Fig. 1 dargestellte Formplatte 10 besteht aus den beiden Formhälften 10' und 10". Die Formplatte 10' hat eine Formhalteplatte 16, eine Zwischenplatte 15, eine Abstandsplatte 14 zur Schaffung eines Aufnahmeraums 23 für einen nicht dargestellten Auswerfer, und eine Aufspannplatte 13. Die Formhälfte 10" hat eine Formhalteplatte 24 und eine Aufspannplatte 25.

In allen Formplatten 13 bis 16 und 24, 25 sind Bohrungen 11 vorhanden, die miteinander fluchten. Sie dienen der Ausrichtung und dem Zusammenbau der vorgenannten Formplatten.

Damit das nicht dargestellte Werkstück hergestellt werden kann, müssen die Formhalteplatten 16, 24 aneinander liegen, und zwar in einer vorbestimmten Lage, die exakt eingehalten werden muß. Hierzu greift ein Gleitführungsbolzen 26 der Formhälfte 10" in eine Gleitführungsbuchse 27 der Formhälfte 10' ein. Der Gleitführungsbolzen 26 der Formhälfte 10" ist in dieser axial zwischen den Platten 24, 25 festgelegt. Er kann diese beiden Platten aus zentrieren, wenn hierzu nicht eine separate Zentrierhülse vorgesehen ist. Die Gleitführungsbuchse 27 ist zwischen den Platten 15, 16 axial festgelegt und zentriert diese beiden Platten auch in deren Bohrungen 11.

Die Zentrierung der Platten 13 bis 15 erfolgt mit Hilfe der Zentrierhülse 12, die gemäß Fig. 1 durch Beaufschlagung des Hülsenendes 19 in der Einsetzrichtung 18 eingebaut wird. Der Einbau kann dadurch erleichtert werden, daß die Hülse etwas zusammengedrückt wird, was durch den Längsschlitz 17 ermöglicht wird, der in Fig. 2 dargestellt ist. Dieser Längsschlitz 17 ist wellenförmig, damit sich die Zentrierhülse 12 nicht axial verzieht, was radial Auswirkungen haben könnte.

Nahe dem Hülsenende 19 ist eine Scheibe 20 im Hülseninneren 28 angeordnet, und zwar axial fest. Der axial feste Zusammenbau der Scheibe mit 20 mit dem Hülsenende 19 wird dadurch erreicht, daß die Zentrierhülse 12 eine Ringnut 29 hat, in die ein Ringvorsprung 30 der Scheibe 20 eingreift. Der Ringvorsprung 30 ist bezüglich der Seitenflächen 31 der Scheibe 20 mittig angeordnet, so daß Ringschultern 32 entstehen.

Durch den axial formschlüssigen Zusammenbau der Scheibe 20 mit der Hülse 12 kann letztere axial in den Bohrungen 11 der Platten 13 bis 15 bewegt werden, auch wenn die Zentrierhülse darin mehr oder weniger klemmt. Ein Ausbau der Zentrierhülse 12 erfolgt beispielsweise dadurch, daß sie mit einem Dorn von der Trennebene 33 der Formhälften 10', 10" ausgetrieben wird, welcher auf der inneren Seitenfläche 31 der Scheibe 20 aufsitzt und gedrückt oder geschlagen wird. Gemäß Fig. 2 ist die Scheibe 20 mit einer Hülsenausziehausnehmung 21 versehen, durch die ein Werkstück hindurchgesteckt und mit der Scheibe 20 verhakt werden kann, um diese und damit die Hülse 12 aus der Bohrung 11 herauszuziehen. Die Hülsenausziehausnehmung 21 ist eine Gewindebohrung mit einem Innengewinde 34, in welches ein mit entsprechendem Außengewinde versehenes Werkzeug eingeschraubt werden kann, um die Hülse 12 aus der Bohrung 11 herauszuziehen.

Die Scheibe 20 kann so bemessen sein, daß sie einen Außendurchmesser 22 hat, der auf die Innenwand der Ringnut 29 drückt, so daß die Zentrierhülse 12 leicht aufgeweitet wird. Sie liegt dann mit ihrem Außenumfang 12' an der Innenwand 11' der Bohrung 11 an und klemmt sich damit an der Formplatte 13 fest. Diese Klemmung bewirkt eine zusätzliche Halterung der Zentrierhülse 12 zu dem durch deren Spannkraft in der Bohrung 11 gegebenen Klemmsitz. Die zusätzliche Klemmwirkung tritt nur im Bereich des Hülsenendes 19 ein, so daß die Hülse 12 beim Herausziehen in erwünschter Weise nur über eine geringe Länge entgegen dieser zusätzlichen Klemmkraft aus der Bohrung 11 herausgezogen werden muß. Hat die Zentrierhülse 12 mit ihrem Hülsenende 19 die Bohrung 11 verlassen, so wird das weitere Herausziehen durch die Nachgiebigkeit der mit einem Längsschlitz 17 versehenen Zentrierhülse 12 erleichtert.

Es ist aber auch möglich, auf die Spreizwirkung durch die Scheibe 20 zu verzichten. In diesem Fall wird der Außendurchmesser 22 etwas kleiner ausgebildet, als der Durchmesser der Innenwand der Ringnut 29 und auch die Ringschultern 32 werden etwas weniger durchmesserstark ausgebildet, so daß sich die gestrichelt dargezeichnete Ausgestaltung ergibt. In diesem Fall ist noch immer der radiale Eingriff gegeben, also der axial feste Zusammenbau zwischen der Scheibe 20 und der Zentrierhülse 12 und damit die Übertragung von Axialkräften zum Ein- oder Ausbau der Zentrierhülse 12. Diese kann federnd nachgeben bzw. sich spreizen und so völlig unbeeinträchtigt von der Scheibe 20 einen Klemmsitz in der Bohrung 11 der Formplatten 13 bis 15 einnehmen.

## Ansprüche

1. Spritzgießform, insbesondere für Spritzgießmaschinen zur Verarbeitung thermoplastischer Kunststoffe, die mehrere aneinanderliegende Formplatten (10) aufweist, welche von in fluchtende Bohrungen (11) eingesetzten Zentrierhülsen (12) zentriert sind, wobei eine Zentrierhülse (12) einen Außendurchmesseränderungen gestattenden Längsschlitz hat, **dadurch gekennzeichnet**, daß das in Einsetzrichtung (18) hintere Hülsenende (19) eine darin axial fest angeordnete separate Scheibe (20) aufweist.

2. Spritzgießform nach Anspruch 1, **dadurch gekennzeichnet**, daß die separate Scheibe (20) mit einer Hülsenausziehausnehmung (21) versehen ist.

3. Spritzgießform nach Anspruch 2, **dadurch gekennzeichnet**, daß die Hülsenausziehausnehmung (21) eine Gewindebohrung ist.

4. Spritzgießform nach einem oder mehreren der Ansprüche 1 bis 3, **dadurch gekennzeichnet**, daß die Scheibe (20) mit der Zentrierhülse (12) axial formschlüssig zusammengebaut ist.

5. Spritzgießform nach einem oder mehreren der Ansprüche 1 bis 4, **dadurch gekennzeichnet**, daß die Scheibe (20) einen Außendurchmesser (22) aufweist, durch den das betreffende Ende (19) der Zentrierhülse (12) etwas aufgeweitet ist.

6. Spritzgießform nach einem oder mehreren der Ansprüche 1 bis 5, **dadurch gekennzeichnet**, daß die Zentrierhülse (12) eine Ringnut (29) hat, in die ein Ringvorsprung (30) der Scheibe (20) eingreift.

7. Spritzgießform nach einem oder mehreren der Ansprüche 1 bis 6, **dadurch gekennzeichnet**, daß die separate Scheibe (20) mit der Zentrierhülse (12) radial begrenzt beweglich zusammengebaut ist.

FIG.1

FIG.2

FIG.3